# EUROPEAN PATENT SPECIFICATION

(11) **EP 2 994 305 B1**
(45) Date of publication and mention of the grant of the patent: **27.12.2017**
(21) Application number: 13884101.0
(22) Date of filing: 06.05.2013
(51) Int. Cl.: B32B 5/00, C09D 7/12

(54) **HYDROPHILIC MICROFIBERS AND NANOFIBERS IN COATING COMPOSITIONS**
HYDROPHILE MIKROFASERN UND NANOFASERN IN BESCHICHTUNGSZUSAMMENSETZUNGEN
MICROFIBRES ET NANOFIBRES HYDROPHILES DANS DES COMPOSITIONS DE REVÊTEMENT

(43) Date of publication of application: 16.03.2016
(73) Proprietor: Empire Technology Development LLC, Wilmington, DE 19808 (US)
(72) Inventor: ADAM, Georgius Abidal, Edensor Park, New South Wales 2176 (AU); CARLSON, William Brenden, Seattle, Washington 98125 (US); SJONG, Angele, Louisville, Colorado 80027 (US); WAN, Feng, Issaquah, Washington 98029 (US); LONDERGAN, Timothy Martin, Seattle, Washington 98105 (US)
(74) Representative: Grünecker Patent- und Rechtsanwälte PartG mbB
(86) International application number: PCT/US2013/039636
(87) International publication number: WO 2014/182274

(56) References cited:
- WO-A1-97/30838
- WO-A1-2004/113460
- WO-A1-2010/142508
- WO-A1-2011/151314
- WO-A1-2012/173679
- WO-A2-2007/001405
- US-A1- 2006 240 218
- US-A1- 2009 252 800
- US-A1- 2010 029 884
- US-A1- 2011 229 706
- US-A1- 2011 244 248

## Description

### BACKGROUND

Coatings and paints are routinely used to beautify and protect substrates. The most simple coatings and paints are made of a polymer (the binder) in a solvent (the vehicle), which is commonly called a lacquer. Paints and coatings modify the appearance of an object by adding color, gloss, or texture, and by blending with or differentiating from a surrounding environment. For example, a surface that is highly light scattering can be made glossy by the application of a paint that has a high gloss. Conversely, a glossy surface can be made to appear flat. Thus, the painted surface is hidden, altered, and ultimately changed in some manner by the presence of the coating. In addition, paints also protect the surface from the surrounding elements and prevent or reduce the corrosive process.

Paints and coatings, while protecting the substrate from the surrounding environment, can become dirty over time. The dirt can dull the coating by increasing light scattering or by modifying the color of the coating. Dirt can also affect the durability of a paint or coating. A surface with a hydrophilic coating, however, would allow water to spread out in a thin layer, sweeping dirt off the surface as the water thins out and trickles away. This type of "self-cleaning" behavior is advantageous to an exterior paint, as it keeps the coating clean without requiring extensive cleaning by the customer. A hydrophilic surface would allow water to sheathe over the surface and either solvate or even carry away the dirt molecules. Thus, it is desirable to have a coating with a hydrophilic surface that keeps dirt from sticking to the surface, is self-cleaning, and which eliminates the need for environmental unfriendly chemicals.

WO-A-2004/113460 relates to an aqueous coating composition comprising between 1 to 5% by weight of hydrophilic fibers, from 0.1 to 1% by weight of at least one foam booster and from 0.05 to 0.5% by weight of at least one foam stabilizer, wherein the coating composition is sag and shrink resistant.

US-A-2011/229706 discloses a process for forming aligned nanofibers of polyaniline or a substituted polyaniline, including the steps of providing a first solution containing at least one monomer component selected from the group consisting of aniline monomer and substituted aniline monomer, providing a second solution containing an oxidant, wherein at least one of said first and second solutions further contains an acid, providing a permeable membrane separating the first and second solutions, wherein the membrane permits at least one of the monomer and oxidant to pass there through at a controlled rate, allowing at least one of said monomer and said oxidant to pass through said membrane to form a reaction solution of monomer oxidant, providing a substrate and polymerizing monomer in said reaction solution to form aligned polymer nanofibers on a surface of said substrate.

WO-A-2007/001405 relates to membranes suitable for microfiltration, ultrafiltration and nanofiltration filters. The membrane includes a nanofibrous scaffold, optionally in combination with a non-woven substrate and/or a coating of a polymer and functionalized nanofiller.

US-A-2011/244248 discloses a coating for coating at least one surface of a substrate, wherein said coating comprises fibers, and wherein upon application of the coating on at least one surface of said substrate, the surface exhibits hydrophilicity or greater hydrophilicity compared to an uncoated surface.

WO-A-2010/142508 relates to a coasting substance, particularly for forming an adhesive layer, a plaster layer, a mortar layer, a paint layer, or a colored layer on a component or another substrate, the coating substance containing fibers, fiber bundles and/or fiber aggregates.

### SUMMARY

The current disclosure is directed to paints and coatings with hydrophilic and self-cleaning properties. The coating composition comprises at least one hydrophilic microfiber, at least one hydrophilic nanofiber, or both dispersed in the coating,
wherein the at least one hydrophilic microfiber or the at least one hydrophilic nanofiber comprises a polymer of lactic acid, malonic acid succinic acid, glutaric acid, adipic acid, pimelic acid, azelaic acid sebacic acid fumaric acid, 2,2-dimethylglutaric acid, suberic acid, diglycolic acid, glycolic acid itaconic acid, maleic acid, phthalic acid, or any combinations thereof; and/or
wherein the at least one hydrophilic microfiber or the at least one hydrophilic nanofiber comprises oxidized polyethylene, oxidized polypropylene, oxidized polyacrylonitrile, oxidized isobutylene, or any combinations thereof; and/or
wherein the at least one hydrophilic microfiber or the at least one hydrophilic nanofiber comprises a plurality of hydrophilic groups on the surface of the microfiber or the nanofiber, wherein the plurality of hydrophilic groups comprise an amine, a carboxylic group, an amide, a hydroxylamine, ethanolamine, an ethanolamine derivative, a hydrazine, a hydrazine derivative, a quaternary ammonium salt, or any combinations thereof and/or
wherein the at least one hydrophilic microfiber comprises a hydrophobic microfiber and at least one hydrophilic coating surrounding the hydrophobic microfiber, and/or
wherein the at least one hydrophilic nanofiber comprises a hydrophobic nanofiber and at least one hydrophilic coating surrounding the hydrophobic nanofiber; and
wherein the coating further comprises a thickener and an organic polymeric binder.

The method of coating a substrate in accordance with the present invention comprises:
applying a coating composition to the substrate, wherein the coating composition comprises at least one hydrophilic microfiber, at least one hydrophilic nanofiber or both dispersed in the coating,
wherein the at least one hydrophilic microfiber or the at least one hydrophilic nanofiber comprises a polymer of lactic acid malonic acid succinic acid glutaric acid adipic acid, pimelic acid, azelaic acid, sebacic acid, fumaric acid, 2,2-dimethylglutaric acid, suberic acid, diglycolic acid, glycolic acid, itaconic acid, maleic acid, phthalic acid, or any combinations thereof; and/or
   wherein the at least one hydrophilic microfiber or the at least one hydrophilic nanofiber comprises oxidized polyethylene, oxidized polypropylene, oxidized polyacrylonitrile, oxidized isobutylene, or any combinations thereof; and/or
   wherein the at least one hydrophilic microfiber or the at least one hydrophilic nanofiber comprises a plurality of hydrophilic groups on the surface of the microfiber or the nanofiber, wherein the plurality of hydrophilic groups comprise an amine, a carboxylic group, an amide, a hydroxylamine, ethanolamine, an ethanolamine derivative, a hydrazine, a hydrazine derivative, a quaternary ammonium salt, or any combinations thereof and/or
   wherein the at least one hydrophilic microfiber comprises a hydrophobic microfiber and at least one hydrophilic coating surrounding the hydrophobic microfiber; and/or
   wherein the at least one hydrophilic nanofiber comprises a hydrophobic nanofiber and at least one hydrophilic coating surrounding the hydrophobic nanofiber; and
      wherein the coating further comprises a thickener and an organic polymeric binder.

In an additional embodiment, a coated article comprises a substrate and a coating composition on the substrate, wherein the coating composition is the afore-mentioned coating composition.

Preferred embodiments are set forth in the subclaims.

### BRIEF DESCRIPTION OF THE FIGURES

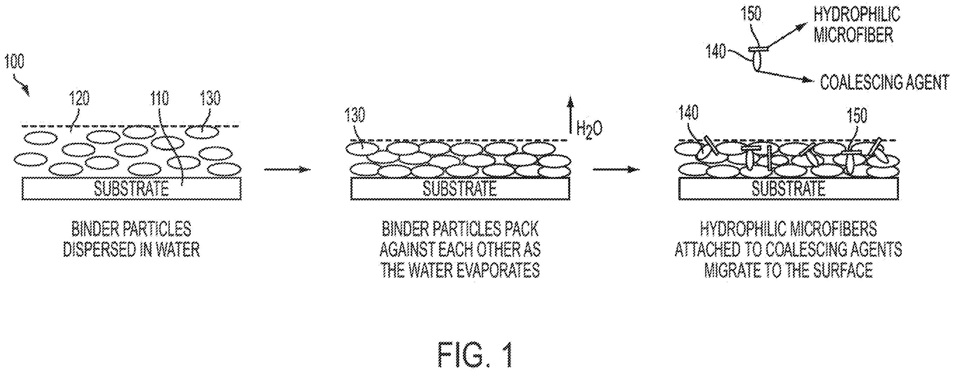

FIG. 1 illustrates a coating with hydrophilic microfibers applied on a surface according to an embodiment.

### DETAILED DESCRIPTION

The present disclosure provides self-cleaning hydrophilic paint compositions that contain hydrophilic microfibers and/or hydrophilic nanofibers. These hydrophilic microfibers and/or hydrophilic nanofibers may include polymers of synthetic molecules. Suitable examples are polymers of natural compounds, such as lactic acid, malonic acid, succinic acid, glutaric acid, adipic acid, pimelic acid, azelaic acid, sebacic acid, fumaric acid, 2,2-dimethylglutaric acid, suberic acid, diglycolic acid, glycolic acid, itaconic acid, maleic acid, phthalic acid, or any combinations thereof.

The hydrophilic microfibers and/or hydrophilic nanofibers may also be surface activated polymers. Surface activation may involve oxidation of the polymers, which may result in formation of hydrophilic moieties on the surface of the polymers. Examples of oxidized polymers include, but are not limited to, oxidized polyethylene, oxidized polypropylene, oxidized polyacrylonitrile, oxidized isobutylene, and any combinations thereof.

The hydrophilic microfibers and/or hydrophilic nanofibers may also include hydrophilic groups on the surface of the microfiber or the nanofiber. Non-limiting examples of such hydrophilic groups include amines, carboxylic groups, amides, hydroxylamines, ethanolamines, ethanolamine derivatives, hydrazines, hydrazine derivatives, quaternary ammonium salts, and any combinations thereof.

The hydrophilic microfiber may also be a hydrophobic microfiber with a hydrophilic coating surrounding the hydrophobic microfiber. The hydrophilic nanofiber may be a hydrophobic nanofiber with a hydrophilic coating surrounding the hydrophobic nanofiber. Examples of such hydrophilic coatings include coatings comprising polyesters, polyvinyl alcohols, polyethylene glycols, epoxides, and any combinations thereof. The microfibers and/or nanofibers may be converted from hydrophobic to hydrophilic by coating them with hydrophilic coatings using methods well known in the art. For example, the coating process may be carried out at temperatures higher than a glass transition temperature of the coating such that the coating molecules can penetrate into the polymer chains of the hydrophobic microfiber. When cooled, the coating molecules may become physically locked between the polymer chain matrix and may be prevented from leaching. Alternatively, the coating process may include applying a hydrophilic coating solution and allowing it to penetrate into the matrix of the hydrophobic microfiber. The microfiber soaked with the coating may be subjected to oxidation, and the active groups of the hydrophilic coating may form covalent linkages with the microfiber matrix, thereby forming stable complexes.

In some embodiments, the hydrophilic microfibers may have an average length of about 0.005 micron to about 50 microns, about 0.005 micron to about 30 microns, about 0.005 micron to about 20 microns, about 0.005 micron to about 10 microns, or about 0.005 micron to about 1 micron. Specific examples of average lengths include about 0.005 micron, about 0.01 micron, about 0.1 micron, about 1 micron, about 5 microns, about 10 microns, about 20 microns, about 30 microns, about 40 microns, about 50 microns, and ranges between (and including the endpoints of) any two of these values. In some embodiments, the hydrophilic nanofibers may have an average length of about 0.1 nanometer to about 100 nanometers, about 0.1 nanometer to about 20 nanometers, about 0.1 nanometer to about 10 nanometers, or about 0.1 nanometer to about 1 nanometer. Specific examples of average lengths include, about 0.1 nanometer, about 1 nanometer, about 10 nanometers, about 50 nanometers, about 100 nanometers, and ranges between (and including the endpoints of) any two of these values.

In some embodiments, the hydrophilic microfibers and/or hydrophilic nanofibers may have an average diameter of about 100 nanometers to about 1 micron, about 200 nanometers to about 1 micron, about 400 nanometers to about 1 micron, about 600 nanometers to about 1 micron, or about 800 nanometers to about 1 micron. Specific examples of average diameters include about 100 nanometers, about 200 nanometers, about 400 nanometers, about 600 nanometers, about 800 nanometers, about 1 micron, and ranges between (and including the endpoints of) any two of these values.

The hydrophilic microfiber and/or hydrophilic nanofiber may be present in a coating composition at about 1 weight percent to about 15 weight percent, about 1 weight percent to about 10 weight percent, about 1 weight percent to about 5 weight percent, about 1 weight percent to about 3 weight percent, or about 1 weight percent to about 2 weight percent. Specific examples include about 1 weight percent, about 5 weight percent, about 7 weight percent, about 10 weight percent, about 12 weight percent, about 15 weight percent of the total weight, and ranges between (and including the endpoints of) any two of these values.

An exemplary coating embodiment is shown in FIG. 1. The coating **100** with hydrophilic microfibers is applied on a substrate **110.** As water **120** evaporates, binder particles **130** pack against each other forming an irreversible networked structure. During this process, coalescing agents **140** along with microfibers **150** may migrate to the surface. The microfibers provides a hydrophilic surface to the coating, thus aiding in self-cleaning of the surface. These surfaces are able to interact and retain water molecules for relatively longer periods of time, thus keeping the surface wet and helping water to sheathe off and remove dirt.

Paints and coatings may contain one or more additives in their composition. These additives may alter one or more of the properties of the paint, such as shelf life, application, longevity, and health and safety. Such additives may be added, for example, during the manufacture of the emulsion polymer or during the formulation of the paint itself. Additives include, but are not limited to, initiators, rheology modifiers, preservatives, and coalescing agents. Initiators are a source of free radicals to initiate the polymerization process in which monomers condense to form the polymers. Coatings may contain a redox system initiator, such as ferrous and thiosulfate salts along with the persulfate salts, that promote polymerization at room temperature.

Thickeners and rheology modifiers are also added to coatings to achieve the desired viscosity and flow properties. Thickeners function by, for example, forming multiple hydrogen bonds with the acrylic polymers, thereby causing chain entanglement, looping and/or swelling, which results in volume restriction. Thickeners, such as cellulose derivatives including hydroxyethyl cellulose, methyl cellulose and carboxymethyl cellulose, may be used in the compositions.

One or more preservatives may be added in the coating compositions in low doses to protect against the growth of microorganisms. Preservatives, such as methyl benzisothiazolinones, chloromethylisothiazolinones, barium metaborate and 1-(3-chloroallyl)-3,5,7-triaza-1-azoniaadamantane chloride, may be used.

Coalescing agents, such as ester alcohols, benzoate ethers, glycol ethers, glycol ether esters and n-methyl-2-pyrrolidone, may be added to the coating compositions. Non-limiting examples of glycol ethers include ethylene glycol butyl ether, diethylene glycol butyl ether, triethylene glycol butyl ether, and any combinations thereof. Coalescing agents are added, for example, to promote film formation under varying atmospheric conditions. They may be slow evaporating solvents with some solubility in the polymer phase. They may also act as a temporary plasticizer, allowing film formation at temperatures below the system's glass transition temperature. After film formation, the coalescing agents may slowly diffuse to the surface and evaporate, increasing the hardness and block resistance of the film. In some embodiments, coalescing agents may be gemini surfactants or block copolymer surfactants. Examples of block copolymer surfactants include copolymers of polyethylene oxide-polyvinyl pyrolidone, polyvinyl alcohol-polystyrene, polyethylene oxide-butyl ether, polyethylene oxide-ethyl ester, and any combinations thereof.

Coatings may further contain one or more of the following additives: solvents, pigments, plasticizers, and surfactants. Surfactants may be used, for example, to create the micelles for particle formation, as well as long-term particle stabilization, to provide stability through electrostatic and steric hindrance mechanisms. Both ionic and non-ionic surfactants may be used. Examples may include, but are not limited to, alkyl phenol ethoxylates, sodium lauryl sulfate, dodecylbenzene sulfonate, polyoxyethylene alkyl ethers, polyoxyethylene alkyl allyl ethers, acetylene glycols, polyoxyethylene, stearic acid and polyoxypropylene.

One or more plasticizers may be added to the compositions to adjust the tensile properties of the paint film. Plasticizers include, for example, a glucose-based derivative, a glycerine-based derivative, propylene glycol, ethylene glycol, and phthalates.

Paints may further include one or more pigments. The term "pigments" is intended to embrace, without limitation, pigmentary compounds employed as colorants, including white pigments, as well as ingredients commonly known in the art as "opacifying agents" and "fillers". Pigments may be any particulate organic or inorganic compound and may provide coatings with the ability to obscure a background of contrasting color (hiding power).

Coating compositions include a binder. The binder is an organic polymeric binder. The binder may be a polymer of an amide, an ester, an ether, an epoxy, an acrylate, an acrylonitrile, or any combination thereof. In the broadest aspect, it is contemplated that any polymeric binder may be employed. In some embodiments, the polymeric binder is a water-dispersible polymer. The water-dispersible polymer may include, for example, a polymer or a copolymer of the following: alkylacrylate, alkyl methacrylate, allyl methacrylate, acrylic acid, methacrylic acid, acrylamide, 2-hydroxyethyl methacrylate, 2-hydroxypropyl methacrylate, thioethyl methacrylate, vinyl methacrylate, vinyl benzene, 2-hydroxyethyl acrylate, butyl acrylate, 2-ethylhexyl acrylate, vinyltrimethoxysilane, vinyltriethoxysilane, vinyl formate, vinyl acetate, vinyl propionate, vinyl butyrate, vinyl hexanoate, vinyltoluene, α-methyl styrene, chlorostyrene, styrenesulfonic acid, and any combination thereof. Coating compositions may also include a single binder or a mixture of two or more polymeric binders that may be of the same class or different classes. For example, organic binders may be combined with a silicone-based binder.

In some embodiments, the hydrophilic microfibers and/or hydrophilic nanofibers may be dispersed in inorganic binders. Inorganic binders may include, without limitation, alkali metal polysilicates, such as potassium polysilicate, sodium polysilicate, lithium polysilicate.

The hydrophilic microfibers and/or hydrophilic nanofibers may be added to a paint composition when the paint is prepared or any time before a consumer applies the paint. The hydrophilic microfibers and/or hydrophilic nanofibers may be present as a separate component or a kit, and mixed with the paint before use. For example, the end consumer may add the hydrophilic microfibers and/or hydrophilic nanofibers to any conventional paint formulation before use.

The present disclosure relates to hydrophilic coating compositions that result in a hydrophilic coating, when applied to a substrate and cured. A hydrophilic coating composition may be a liquid hydrophilic coating composition, such as a solution or a dispersion comprising a liquid medium. Any liquid medium that allows application of the hydrophilic coating formulation on a surface would suffice. Examples of liquid media are alcohols, like methanol, ethanol, propanol, butanol, acetone, methylethyl ketone, tetrahydrofuran, dichloromethane, toluene, and aqueous mixtures or emulsions thereof, or water. The coating compositions of the present disclosure may be a latex emulsion, an aqueous solution, a non-aqueous solution, or a powder. The hydrophilic coating composition may further include components that are converted into the hydrophilic coating when cured, and thus remain in the hydrophilic coating after curing. As used herein, curing refers to physical or chemical hardening or solidifying by any method, such as heating, cooling, drying, crystallization or curing as a result of a chemical reaction, such as radiation-curing or heat-curing. In the cured state, all or a portion of the components in the hydrophilic coating formulation may be cross-linked forming covalent linkages between all or a portion of the components, such as by using UV or electron beam radiation. In addition, in the cured state, all or a portion of the components may be ionically bonded, bonded by dipole-dipole type interactions, or bonded via Van der Waals forces or hydrogen bonds.

To apply the hydrophilic coating on the substrate, a primer coating may be used in order to provide a binding between the hydrophilic coating and the substrate. In some instances, the primer coating facilitates adhesion of the hydrophilic coating to the substrate. The binding between the primer coating and the hydrophilic coating may occur due to covalent or ionic links, hydrogen bonding, or polymer entanglements. These primer coatings may be solvent-based, water-based (latexes or emulsions) or solvent-free and may include linear, branched and/or cross-linked components. Typical primer coatings that could be used may include, for example, polyether sulfones, polyurethanes, polyesters, polyacrylates, polyamides, polyethers, polyolefins and copolymers thereof. The hydrophilic coatings of the present disclosure can also be applied on the substrate without a primer.

The coating of the present disclosure may be a decorative coating, an industrial coating, a protective coating, a self-cleaning coating, or any combination thereof. In addition, the presence of microfibers and/or nanofibers in the paint may prevent surface bleeding, and improve rheological properties, thermal insulation, chemical resistance, and mechanical properties of a paint.

The coating of the present disclosure may generally be applied to any substrate. The substrate may be an article, an object, a vehicle, or a structure. Although no particular limitation is imposed on the substrate to be used in the present disclosure, exemplary substrates include, an exterior of a building, vehicles, cars, trucks, bicycles, bridges, airplanes, hull of a boat or ship, metal railings, fences, glasses, plastics, metals, ceramics, wood, stone, cement, fabric, paper, leather, surfaces of swimming pools, spas, showers, bathtubs, sinks, ceramic and porcelain tile, plumbing, faucets, shower curtains, pipes, drains and sewers, electronics, automotive parts, marine parts, aerospace parts and other metal substrates. The coating may be applied to a substrate by generally any method, such as spraying, dipping, rolling, brushing, or any combination thereof.

Microfibers and/or nanofibers of the present disclosure may be prepared from any of the polymers described herein by wet spinning, dry spinning, melt spinning, air gap spinning, electrospinning, flash extrusion, or other methods that are well known in the art.

In some embodiments, the microfibers and/or nanofibers may be surface activated by oxidation, and such oxidation process may result in formation of hydrophilic moieties on the surface of the polymers. This may be formed by contacting an oxidizing agent with a microfiber and/or a nanofiber. The oxidizing agent may be a permanganate, nitric acid, a perchlorate, sulfuric acid, hydrogen peroxide, a hypochlorite, a chromate or any combination thereof. The oxidation process may be accelerated by heating or UV light. In some embodiments, the oxidizing agent and the microfiber and/or the nanofiber may be heated to a temperature of about 40 °C to about 60 °C, about 40 °C to about 50 °C, or about 40 °C to about 45 °C. Specific examples of temperatures include about 40 °C, about 50 °C, about 60 °C, and ranges between (and including the endpoints of) any two of these values. The heating may be performed for about 30 minutes to about 12 hours, about 30 minutes to about 10 hours, about 30 minutes to about 8 hours, about 30 minutes to about 6 hours, or about 30 minutes to about 2 hours. Specific examples of duration of time include about 30 minutes, about 1 hour, about 2 hours, about 4 hours, about 6 hours, about 8 hours, about 12 hours, and ranges between (and including the endpoints of) any two of these values. In some cases, the heating may be performed for longer than 12 hours. At the end of this process, the microfibers and/or nanofibers may be washed to remove the excess oxidizing agent.

### EXAMPLES

### EXAMPLE 1: Preparation of hydrophilic polyethylene microfibers (10 microns in diameter)

About 100 grams of polyethylene microfibers (10 microns in diameter) are sprayed with 20 weight percent potassium permanganate solution and heated to a temperature of about 50 °C for 60 minutes. The microfibers are washed with water to remove excess potassium permanganate and to stop further oxidation. The microfibers are dried in an oven overnight.

### EXAMPLE 2: Preparation of hydrophilic polypropylene microfibers (10 microns in diameter)

About 100 grams of polypropylene microfibers (10 microns in diameter) are sprayed with 5 weight percent perchloric acid solution and heated to a temperature of about 50 °C for 60 minutes. The microfibers are washed with water to remove excess perchloric acid and to stop further oxidation. The microfibers are dried in an oven overnight.

### EXAMPLE 3: Preparation of hydrophilic polypropylene microfibers (20 microns in diameter)

About 100 grams of polypropylene microfibers (20 microns in diameter) are sprayed with 10 weight percent nitric acid solution and heated to a temperature of about 50 °C for 60 minutes. The microfibers are washed with water to remove excess nitric acid and to stop further oxidation. The microfibers are dried in an oven overnight.

### EXAMPLE 4: Preparation of a coating with hydrophilic microfibers of Example 1

About 10 grams of the hydrophilic microfibers (3.67 weight percent) of Example 1 are mixed with 40 grams of chromium oxide pigment (14.68 weight percent), 2 grams of thickener (hydroxyethyl cellulose, 0.73 weight percent), 150 grams of solvent (water, 5.076 weight percent), 70 grams of binder (methyl methacrylate, 25.70 weight percent), 0.3 grams of coalescing agent (2,2,4-trimethyl-1,3-pentanediolmono(2-methylpropanoate)) (0.110 weight percent), and 0.05 grams of bactericide (0.018 weight percent). The components are mixed under high shear for 30 minutes.

### EXAMPLE 5: Evaluation of hydrophilic property of a coating with microfibers

The hydrophilic coating of Example 4 is coated on a glass surface and dried at room temperature. The surface free energy and the water droplet contact angle of the hydrophilic coating are measured as follows. A Zisman plotting method is employed for measuring the surface free energy. The surface tension of various concentrations of an aqueous solution of magnesium chloride is plotted along the X-axis, and the contact angle in terms of cos θ is plotted along the Y-axis. A graph with a linear relationship between the two is obtained. The graph is extrapolated such that the surface tension at contact angle 0° is measured and is defined as the surface free energy of the coated glass surface. The surface free energy of the glass surface measured will be more than 85 milliNewton/meter. The high surface free energy is indicative of the hydrophilic property of the coating.

### EXAMPLE 6: Evaluation of hydrophilic property of a coating without microfibers

A coating composition without any hydrophilic microfibers and/or hydrophilic nanofibers is coated on a glass surface and dried at room temperature. The surface free energy and the water droplet contact angle of the hydrophilic coating are measured as follows. A Zisman plotting method is employed for measuring the surface free energy. The surface tension of various concentrations of an aqueous solution of magnesium chloride is plotted along the X-axis, and the contact angle in terms of cos θ is plotted along the Y-axis. A graph with a linear relationship between the two is obtained. The graph is extrapolated such that the surface tension at contact angle 0° is measured and is defined as the surface free energy of the coated glass surface. The surface free energy of the glass surface measured will be less than 85 milliNewton/meter. The lower surface free energy, for example as compared to Example 5, suggests that coatings without the hydrophilic microfibers and/or hydrophilic nanofibers of the present disclcosure are less hydrophilic than coatings with these fibers.

### EXAMPLE 7: Preparation of a coating with hydrophilic lactic acid nanofibers

About 10 grams (3.67 weight percent) of the hydrophilic polylactic acid nanofibers prepared by electrospinning are mixed with 40 grams of chromium oxide pigment (14.68 weight percent), 2 grams of thickener (hydroxyethyl cellulose, 0.73 weight percent), 150 grams of solvent (water, 5.076 weight percent), 70 grams of binder (methyl methacrylate, 25.70 weight percent), 0.3 grams of coalescing agent (2,2,4-trimethyl-1,3-pentanediolmono(2-methylpropanoate)) (0.110 weight percent), and 0.05 grams of bactericide (0.018 weight percent). The components are mixed under high shear for 30 minutes.

### EXAMPLE 8: Evaluation of hydrophilic property of a coating with nanofibers

The hydrophilic coating of Example 7 is coated on a glass surface and dried at room temperature. The surface free energy and the water droplet contact angle of the hydrophilic coating are measured as follows. A Zisman plotting method is employed for measuring the surface free energy. The surface tension of various concentrations of an aqueous solution of magnesium chloride is plotted along the X-axis, and the contact angle in terms of cos θ is plotted along the Y-axis. A graph with a linear relationship between the two is obtained. The graph is extrapolated such that the surface tension at contact angle 0° is measured and is defined as the surface free energy of the coated glass surface. The surface free energy of the glass surface measured will be more than 85 milliNewton/meter. The high surface free energy is indicative of the hydrophilic property of the coating.

As used in this document, the singular forms "a," "an," and "the" include plural references unless the context clearly dictates otherwise. Unless defined otherwise, all technical and scientific terms used herein have the same meanings as commonly understood by one of ordinary skill in the art. Nothing in this disclosure is to be construed as an admission that the embodiments described in this disclosure are not entitled to antedate such disclosure by virtue of prior invention. As used in this document, the term "comprising" means "including, but not limited to."

While various compositions, methods, and devices are described in terms of "comprising" various components or steps (interpreted as meaning "including, but not limited to"), the compositions, methods, and devices can also "consist essentially of" or "consist of" the various components and steps, and such terminology should be interpreted as defining essentially closed-member groups.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (*e.g*., bodies of the appended claims) are generally intended as "open" terms (*e.g*., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (*e.g*., "a" and/or "an" should be interpreted to mean "at least one" or "one or more"); the same holds true for the use of definite articles used to introduce claim recitations. In addition, even if a specific number of an introduced claim recitation is explicitly recited, those skilled in the art will recognize that such recitation should be interpreted to mean at least the recited number (*e.g.,* the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (*e.g*., " a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (*e.g*., " a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all languages such as "up to," and "at least," include the number recited and refer to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

## Claims

1. A coating composition comprising at least one hydrophilic microfiber, at least one hydrophilic nanofiber, or both dispersed in the coating,
wherein the at least one hydrophilic microfiber or the at least one hydrophilic nanofiber comprises a polymer of lactic acid, malonic acid, succinic acid, glutaric acid, adipic acid, pimelic acid, azelaic acid, sebacic acid, fumaric acid, 2,2-dimethylglutaric acid, suberic acid, diglycolic acid, glycolic acid, itaconic acid, maleic acid, phthalic acid, or any combinations thereof; or wherein the at least one hydrophilic microfiber or the at least one hydrophilic nanofiber comprises oxidized polyethylene, oxidized polypropylene, oxidized polyacrylonitrile, oxidized isobutylene, or any combinations thereof; or wherein the at least one hydrophilic microfiber or the at least one hydrophilic nanofiber comprises a plurality of hydrophilic groups on the surface of the microfiber or the nanofiber, wherein the plurality of hydrophilic groups comprise an amine, a carboxylic group, an amide, a hydroxylamine, ethanolamine, an ethanolamine derivative, a hydrazine, a hydrazine derivative, a quaternary ammonium salt, or any combinations thereof; or wherein the at least one hydrophilic microfiber comprises a hydrophobic microfiber and at least one hydrophilic coating surrounding the hydrophobic microfiber; or wherein the at least one hydrophilic nanofiber comprises a hydrophobic nanofiber and at least one hydrophilic coating surrounding the hydrophobic nanofiber; and
wherein the coating further comprises a thickener and an organic polymeric binder.

2. The coating composition of claim 1,
wherein the hydrophilic coating comprises a polyester, a polyvinyl alcohol, a polyethylene glycol, an epoxide, or any combinations thereof; or wherein the at least one hydrophilic nanofiber has an average length of 0.1 nanometer to 100 nanometers; or wherein the at least one hydrophilic microfiber, the at least one hydrophilic nanofiber or a mixture of both is present at 1 weight percent to 15 weight percent of the coating composition; or further comprising a solvent, a pigment, a coalescing agent, a rheology modifier, a plasticizer, a surfactant, or any combinations thereof; or further comprising a binder comprising a polymer of an amide, an ester, an ether, an epoxy, an acrylate, an acrylonitrile, or any combinations thereof; or further comprising a binder comprising a polymer of alkylacrylate, alkyl methacrylate, allyl methacrylate, acrylic acid, methacrylic acid, acrylamide, 2-hydroxyethyl methacrylate, 2-hydroxypropyl methacrylate, thioethyl methacrylate, vinyl methacrylate, vinyl benzene, 2-hydroxyethyl acrylate, butyl acrylate, 2-ethylhexyl acrylate, vinyltrimethoxysilane, vinyltriethoxysilane, vinyl formate, vinyl acetate, vinyl propionate, vinyl butyrate, vinyl hexanoate, vinyltoluene, α-methyl styrene, chlorostyrene, styrenesulfonic acid, or a copolymer of any of the foregoing, or any combinations thereof; or further comprising a coalescing agent comprising a gemini surfactant or a block copolymer surfactant; or further comprising a coalescing agent comprising ethylene glycol butyl ether, diethylene glycol butyl ether, triethylene glycol butyl ether, or any combinations thereof; or further comprising a block copolymer surfactant comprising a copolymer of polyethylene oxide-polyvinyl pyrolidone, polyvinyl alcohol-polystyrene, polyethylene oxide-butyl ether, polyethylene oxide-ethyl ester, or any combinations thereof.

3. The coating composition of claim 1, wherein the coating composition is a latex emulsion, non-aqueous dispersion, or a powder.

4. The coating composition of claim 1, wherein the coating composition is a decorative coating, an industrial coating, a protective coating, a self-cleaning coating, a biocidal coating, or any combinations thereof.

5. A method of coating a substrate, the method comprising:
applying a coating composition to the substrate, wherein the coating composition comprises at least one hydrophilic microfiber, at least one hydrophilic nanofiber or both dispersed in the coating;
wherein the at least one hydrophilic microfiber or the at least one hydrophilic nanofiber comprises a polymer of lactic acid, malonic acid, succinic acid, glutaric acid, adipic acid, pimelic acid, azelaic acid, sebacic acid, fumaric acid, 2,2-dimethylglutaric acid, suberic acid, diglycolic acid, glycolic acid, itaconic acid, maleic acid, phthalic acid, or any combinations thereof; or wherein the at least one hydrophilic microfiber or the at least one hydrophilic nanofiber comprises oxidized polyethylene, oxidized polypropylene, oxidized polyacrylonitrile, oxidized isobutylene, or any combinations thereof; or wherein the at least one hydrophilic microfiber or the at least one hydrophilic nanofiber comprises a plurality of hydrophilic groups on the surface of the microfiber or the nanofiber, wherein the plurality of hydrophilic groups comprise an amine, a carboxylic group, an amide, a hydroxylamine, ethanolamine, an ethanolamine derivative, a hydrazine, a hydrazine derivative, a quaternary ammonium salt, or any combinations thereof; or wherein the at least one hydrophilic microfiber comprises a hydrophobic microfiber and at least one hydrophilic coating surrounding the hydrophobic microfiber; or wherein the at least one hydrophilic nanofiber comprises a hydrophobic nanofiber and at least one hydrophilic coating surrounding the hydrophobic nanofiber; and
wherein the coating further comprises a thickener and an organic polymeric binder.

6. The method of claim 5, wherein the coating composition is according to claim 2.

7. The method of claim 5, wherein the coating composition is a decorative coating, an industrial coating, a protective coating, a self-cleaning coating, a biocidal coating, or any combinations thereof.

8. The method of claim 5, wherein the coating composition is applied to the substrate by coating, brushing, dipping, spraying, or rolling, or any combinations thereof; or wherein the substrate is an exterior of a building, a vehicle, a bridge, a metal railing, a fence, glass, ceramic, wood, stone, a pipe, a vessel, or any combinations thereof.

9. A coated article comprising:
a substrate; and
a coating composition on the substrate, wherein the coating composition is the coating composition of any of claims 1 to 3.

10. The coated article of claim 9, wherein the substrate is an exterior of a building, a vehicle, a bridge, a metal railing, a fence, glass, ceramic, wood, stone, a pipe, a vessel, or any combinations thereof.

## Patentansprüche

1. Beschichtungszusammensetzung umfassend wenigstens eine hydrophile Mikrofaser, wenigstens eine hydrophile Nanofaser oder beide in der Beschichtung dispergiert,
wobei die wenigstens eine hydrophile Mikrofaser oder die wenigstens eine hydrophile Nanofaser ein Polymer von Milchsäure, Malonsäure, Bernsteinsäure, Glutarsäure, Adipinsäure, Pimelinsäure, Azelainsäure, Sebacinsäure, Fumarsäure, 2,2-Dimethylglutarsäure, Suberinsäure, Diglycolsäure, Glycolsäure, Itaconsäure, Maleinsäure, Phthalsäure oder beliebigen Kombinationen davon umfasst; oder
wobei die wenigstens eine hydrophile Mikrofaser oder die wenigstens eine hydrophile Nanofaser oxidiertes Polyethylen, oxidiertes Polypropylen, oxidiertes Polyacrylnitril, oxidiertes Isobutylen oder beliebige Kombinationen davon umfasst; oder
wobei die wenigstens eine hydrophile Mikrofaser oder die wenigstens eine hydrophile Nanofaser eine Mehrzahl von hydrophilen Gruppen auf der Oberfläche der Mikrofaser oder der Nanofaser umfasst, wobei die Mehrzahl von hydrophilen Gruppen ein Amin, eine Carboxylgruppe, ein Amid, ein Hydroxylamin, Ethanolamin, ein Ethanolaminderivat, ein Hydrazin, ein Hydrazinderivat, ein quartäres Ammoniumsalz oder beliebige Kombinationen davon umfassen; oder
wobei die wenigstens eine hydrophile Mikrofaser eine hydrophobe Mikrofaser und wenigstens eine hydrophile Beschichtung, welche die hydrophobe Mikrofaser umgibt, umfasst; oder
wobei die wenigstens eine hydrophile Nanofaser eine hydrophobe Nanofaser und wenigstens eine hydrophile Beschichtung, welche die hydrophobe Nanofaser umgibt, umfasst; und
wobei die Beschichtung außerdem ein Verdickungsmittel und ein organisches polymeres Bindemittel umfasst.

2. Beschichtungszusammensetzung nach Anspruch 1, wobei die hydrophile Beschichtung einen Polyester, einen Polyvinylalkohol, ein Polyethylenglycol, ein Epoxid oder beliebige Kombinationen davon umfasst; oder
wobei die wenigstens eine hydrophile Nanofaser eine mittlere Länge von 0,1 Nanometer bis 100 Nanometer aufweist; oder
wobei die wenigstens eine hydrophile Mikrofaser, die wenigstens eine hydrophile Nanofaser oder eine Mischung von beiden in einer Menge von 1 Gew.-% bis 15 Gew.-% der Beschichtungszusammensetzung vorhanden ist; oder
außerdem umfassend ein Lösungsmittel, ein Pigment, ein Koaleszenzmittel, einen Viskositätsveränderer, einen Weichmacher, einen oberflächenaktiven Stoff, oder beliebige Kombinationen davon; oder
außerdem umfassend ein Bindemittel umfassend ein Polymer von einem Amid, einem Ester, einem Ether, einem Epoxid, einem Acrylat, einem Acrylnitril oder beliebigen Kombinationen davon; oder
außerdem umfassend ein Bindemittel umfassend ein Polymer von Alkylacrylat, Alkylmethacrylat, Allylmethacrylat, Acrylsäure, Methacrylsäure, Acrylamid, 2-Hydroxyethylmethacrylat, 2-Hydroxypropylmethacrylat, Thioethylmethacrylat, Vinylmethacrylat, Vinylbenzol, 2-Hydroxyethylacrylat, Butylacrylat, 2-Ethylhexylacrylat, Vinyltrimethoxysilan, Vinyltriethoxysilan, Vinylformiat, Vinylacetat, Vinylpropionat, Vinylbutyrat, Vinylhexanoat, Vinyltoluol, α-Methylstyrol, Chlorstyrol, Styrolsulfonsäure, oder ein Copolymer von beliebigen der vorstehenden, oder beliebige Kombinationen davon; oder
außerdem umfassend ein Koaleszenzmittel umfassend ein Gemini-Tensid oder ein Blockcopolymer-Tensid; oder
außerdem umfassend ein Koaleszenzmittel umfassend Ethylenglycolbutylether, Diethylenglycolbutylether, Triethylenglycolbutylether, oder beliebige Kombinationen davon; oder
außerdem umfassend ein Blockcopolymer-Tensid umfassend ein Copolymer von Polyethylenoxid-Polyvinylpyrrolidon, Polyvinylalkohol-Polystyrol, Polyethylenoxid-Butylether, Polyethylenoxid-Ethylester oder beliebige Kombinationen davon.

3. Beschichtungszusammensetzung nach Anspruch 1, wobei es sich bei der Beschichtungszusammensetzung um eine Latexemulsion, nichtwässrige Dispersion oder ein Pulver handelt.

4. Beschichtungszusammensetzung nach Anspruch 1, wobei es sich bei der Beschichtungszusammensetzung um eine dekorative Beschichtung, eine industrielle Beschichtung, eine Schutzbeschichtung, eine selbstreinigende Beschichtung, eine biozide Beschichtung oder beliebige Kombinationen davon handelt.

5. Verfahren zum Beschichten eines Substrats, wobei das Verfahren umfasst:
Aufbringen einer Beschichtungszusammensetzung auf das Substrat, wobei die Beschichtungszusammensetzung wenigstens eine hydrophile Mikrofaser, wenigstens eine hydrophile Nanofaser oder beide in der Beschichtung dispergiert umfasst;
wobei die wenigstens eine hydrophile Mikrofaser oder die wenigstens eine hydrophile Nanofaser ein Polymer von Milchsäure, Malonsäure, Bernsteinsäure, Glutarsäure, Adipinsäure, Pimelinsäure, Azelainsäure, Sebacinsäure, Fumarsäure, 2,2-Dimethylglutarsäure, Suberinsäure, Diglycolsäure, Glycolsäure, Itaconsäure, Maleinsäure, Phthalsäure oder beliebigen Kombinationen davon umfasst; oder
wobei die wenigstens eine hydrophile Mikrofaser oder die wenigstens eine hydrophile Nanofaser oxidiertes Polyethylen, oxidiertes Polypropylen, oxidiertes Polyacrylnitril, oxidiertes Isobutylen oder beliebige Kombinationen davon umfasst; oder
wobei die wenigstens eine hydrophile Mikrofaser oder die wenigstens eine hydrophile Nanofaser eine Mehrzahl von hydrophilen Gruppen auf der Oberfläche der Mikrofaser oder der Nanofaser umfasst, wobei die Mehrzahl von hydrophilen Gruppen ein Amin, eine Carboxylgruppe, ein Amid, ein Hydroxylamin, Ethanolamin, ein Ethanolaminderivat, ein Hydrazin, ein Hydrazinderivat, ein quartäres Ammoniumsalz oder beliebige Kombinationen davon umfassen; oder
wobei die wenigstens eine hydrophile Mikrofaser eine hydrophobe Mikrofaser und wenigstens eine hydrophile Beschichtung, welche die hydrophobe Mikrofaser umgibt, umfasst; oder
wobei die wenigstens eine hydrophile Nanofaser eine hydrophobe Nanofaser und wenigstens eine hydrophile Beschichtung, welche die hydrophobe Nanofaser umgibt, umfasst; und
wobei die Beschichtung außerdem ein Verdickungsmittel und ein organisches polymeres Bindemittel umfasst.

6. Verfahren nach Anspruch 5, wobei die Beschichtungszusammensetzung gemäß Anspruch 2 ist.

7. Verfahren nach Anspruch 5, wobei es sich bei der Beschichtungszusammensetzung um eine dekorative Beschichtung, eine industrielle Beschichtung, eine Schutzbeschichtung, eine selbstreinigende Beschichtung, eine biozide Beschichtung oder beliebige Kombinationen davon handelt.

8. Verfahren nach Anspruch 5, wobei die Beschichtungszusammensetzung auf das Substrat durch Beschichten, Streichen, Tauchen, Sprühen oder Walzenauftragen oder beliebige Kombinationen davon aufgebracht wird; oder
wobei es sich bei dem Substrat um eine Außenseite eines Gebäudes, ein Fahrzeug, eine Brücke, ein Metallgeländer, einen Zaun, Glas, Keramik, Holz, Stein, ein Rohr, ein Gefäß oder beliebige Kombinationen davon handelt.

9. Beschichteter Artikel umfassend:
ein Substrat; und
eine Beschichtungszusammensetzung auf dem Substrat, wobei die Beschichtungszusammensetzung die Beschichtungszusammensetzung nach einem der Ansprüche 1 bis 3 ist.

10. Beschichteter Artikel nach Anspruch 9, wobei es sich bei dem Substrat um eine Außenseite eines Gebäudes, ein Fahrzeug, eine Brücke, ein Metallgeländer, einen Zaun, Glas, Keramik, Holz, Stein, ein Rohr, ein Gefäß oder beliebige Kombinationen davon handelt.

## Revendications

1. Composition de revêtement comprenant au moins une microfibre hydrophile et/ou au moins une nanofibre hydrophile, dispersées dans le revêtement,
dans laquelle ladite au moins une microfibre hydrophile ou ladite au moins une nanofibre hydrophile comprend un polymère de l'acide lactique, de l'acide malonique, de l'acide succinique, de l'acide glutarique, de l'acide adipique, de l'acide pimélique, de l'acide azélaïque, de l'acide sébacique, de l'acide fumarique, de l'acide 2,2-diméthylglutarique, de l'acide subérique, de l'acide diglycolique, de l'acide glycolique, de l'acide itaconique, de l'acide maléique, de l'acide phtalique, ou d'une combinaison quelconque de ceux-ci ; ou
dans laquelle ladite au moins une microfibre hydrophile ou ladite au moins une nanofibre hydrophile comprend du polyéthylène oxydé, du polypropylène oxydé, du polyacrylonitrile oxydé, de l'isobutène oxydé, ou une combinaison quelconque de ceux-ci ; ou
dans laquelle ladite au moins une microfibre hydrophile ou ladite au moins une nanofibre hydrophile comprend une pluralité de groupes hydrophiles sur la surface de la microfibre ou de la nanofibre, dans laquelle la pluralité de groupes hydrophiles comprend une amine, un groupe carboxyle, un amide, une hydroxylamine, l'éthanolamine, un dérivé de l'éthanolamine, l'hydrazine, un dérivé de l'hydrazine, un sel d'ammonium quaternaire, ou une combinaison quelconque de ceux-ci ; ou
dans laquelle ladite au moins une microfibre hydrophile comprend une microfibre hydrophobe et au moins un revêtement hydrophile entourant la microfibre hydrophobe ; ou
dans laquelle ladite au moins une nanofibre hydrophile comprend une nanofibre hydrophobe et au moins un revêtement hydrophile entourant la nanofibre hydrophobe ; et
dans laquelle le revêtement comprend en outre un épaississant et un liant polymère organique.

2. Composition de revêtement selon la revendication 1,
dans laquelle le revêtement hydrophile comprend un polyester, un alcool polyvinylique, un polyéthylène glycol, un époxyde, ou une combinaison quelconque de ceux-ci ; ou
dans laquelle ladite au moins une nanofibre hydrophile a une longueur moyenne de 0,1 nanomètre à 100 nanomètres ; ou
dans laquelle ladite au moins une microfibre hydrophile, ladite au moins une nanofibre hydrophile, ou un mélange des deux, est présent à raison d'entre 1 et 15 pourcent en masse de la composition de revêtement ; ou
comprenant en outre un solvant, un pigment, un agent de coalescence, un modificateur de rhéologie, un plastifiant, un tensioactif, ou une combinaison quelconque de ceux-ci ; ou
comprenant en outre un liant comprenant un polymère d'un amide, d'un ester, d'un éther, d'un époxyde, d'un acrylate, d'un acrylonitrile, ou d'une combinaison quelconque de ceux-ci ; ou
comprenant en outre un liant comprenant un polymère d'alkylacrylate, de méthacrylate d'alkyle, de méthacrylate d'allyle, d'acide acrylique, d'acide méthacrylique, d'acrylamide, de 2-méthacrylate d'hydroxyéthyle, de 2-méthacrylate d'hydroxypropyle, de méthacrylate de thioéthyle, de méthacrylate de vinyle, de styrène, d'acrylate de 2-hydroxyéthyle, d'acrylate de butyle, d'acrylate de 2-éthylhexyle, de vinyltriméthoxysilane, de vinyltriéthoxysilane, de formiate de vinyle, d'acétate de vinyle, de propionate de vinyle, de butanoate de vinyle, d'hexanoate de vinyle, de vinyltoluène, d'α-méthylstyrène, de chlorostyrène, d'acide styrènesulfonique, ou un copolymère de l'un quelconque de ceux qui précèdent, ou encore une combinaison quelconque de ceux-ci ; ou
comprenant en outre un agent de coalescence comprenant un tensioactif géminé ou un tensioactif copolymère séquencé ; ou
comprenant en outre un agent de coalescence comprenant un éther butylique d'éthylène glycol, un éther butylique de diéthylène glycol, un éther butylique de triéthylène glycol, ou une combinaison quelconque de ceux-ci ; ou
comprenant en outre un tensioactif copolymère séquencé comprenant un copolymère oxyde de polyéthylène - polyvinylpyrrolidone, alcool polyvinylique - polystyrène, oxyde de polyéthylène - éther butylique, oxyde de polyéthylène - ester éthylique, ou une combinaison quelconque de ceux-ci.

3. Composition de revêtement selon la revendication 1, dans laquelle la composition de revêtement est une émulsion de latex, une dispersion non aqueuse ou une poudre.

4. Composition de revêtement selon la revendication 1, dans laquelle la composition de revêtement est un revêtement décoratif, un revêtement industriel, un revêtement de protection, un revêtement autonettoyant, un revêtement biocide, ou une combinaison quelconque de ceux-ci.

5. Procédé de revêtement d'un substrat, le procédé comprenant :
l'application d'une composition de revêtement au substrat, dans lequel la composition de revêtement comprend au moins une microfibre hydrophile et/ou au moins une nanofibre hydrophile, dispersées dans le revêtement ;
dans lequel ladite au moins une microfibre hydrophile ou ladite au moins une nanofibre hydrophile comprend un polymère de l'acide lactique, de l'acide malonique, de l'acide succinique, de l'acide glutarique, de l'acide adipique, de l'acide pimélique, de l'acide azélaïque, de l'acide sébacique, de l'acide fumarique, de l'acide 2,2-diméthylglutarique, de l'acide subérique, de l'acide diglycolique, de l'acide glycolique, de l'acide itaconique, de l'acide maléique, de l'acide phtalique, ou d'une combinaison quelconque de ceux-ci ; ou
dans lequel ladite au moins une microfibre hydrophile ou ladite au moins une nanofibre hydrophile comprend du polyéthylène oxydé, du polypropylène oxydé, du polyacrylonitrile oxydé, de l'isobutène oxydé, ou une combinaison quelconque de ceux-ci ; ou
dans lequel ladite au moins une microfibre hydrophile ou ladite au moins une nanofibre hydrophile comprend une pluralité de groupes hydrophiles sur la surface de la microfibre ou de la nanofibre, dans lequel la pluralité de groupes hydrophiles comprend une amine, un groupe carboxyle, un amide, une hydroxylamine, l'éthanolamine, un dérivé de l'éthanolamine, l'hydrazine, un dérivé de l'hydrazine, un sel d'ammonium quaternaire, ou une combinaison quelconque de ceux-ci ; ou
dans lequel ladite au moins une microfibre hydrophile comprend une microfibre hydrophobe et au moins un revêtement hydrophile entourant la microfibre hydrophobe ; ou
dans lequel ladite au moins une nanofibre hydrophile comprend une nanofibre hydrophobe et au moins un revêtement hydrophile entourant la nanofibre hydrophobe ; et
dans lequel le revêtement comprend en outre un épaississant et un liant polymère organique.

6. Procédé selon la revendication 5, dans lequel la composition de revêtement répond à la revendication 2.

7. Procédé selon la revendication 5, dans lequel la composition de revêtement est revêtement décoratif, un revêtement industriel, un revêtement de protection, un revêtement autonettoyant, un revêtement biocide, ou une combinaison quelconque de ceux-ci.

8. Procédé selon la revendication 5,
dans lequel la composition de revêtement est appliquée au substrat par revêtement, brossage, trempage, aspersion, au rouleau, ou par une combinaison quelconque de ces procédés ; ou
dans lequel le substrat est l'extérieur d'un bâtiment, d'un véhicule, d'un pont, d'un garde-corps métallique, d'une clôture, d'un verre, d'une céramique, d'un bois, d'une pierre, d'un tuyau, d'un récipient, ou d'une combinaison quelconque de ceux-ci.

9. Article revêtu, comprenant :
un substrat ; et
une composition de revêtement du substrat, dans lequel la composition de revêtement est la composition de revêtement selon l'une quelconque des revendications 1 à 3.

10. Article revêtu selon la revendication 9, dans lequel le substrat est l'extérieur d'un bâtiment, d'un véhicule, d'un pont, d'un garde-corps métallique, d'une clôture, d'un verre, d'une céramique, d'un bois, d'une pierre, d'un tuyau, d'un récipient, ou d'une combinaison quelconque de ceux-ci.
